# EUROPÄISCHE PATENTSCHRIFT

(11) **EP 0 687 541 B1**
(45) Veröffentlichungstag und Bekanntmachung des Hinweises auf die Patenterteilung: **28.04.1999**
(21) Anmeldenummer: 95108636.2
(22) Anmeldetag: 06.06.1995
(51) Int. Cl.: B29C 45/17

(54) **Holmlose Formschliesseinrichtung für Spritzgiessmaschinen**
Tie bar-less mould clamping device for injection moulding machines
Dispositif de fermeture de moule sans colonnes pour presses à injecter

(30) Priorität: 14.06.1994 DE 4420639; 14.06.1994 DE 9421166 U; 30.03.1995 DE 19511808
(43) Veröffentlichungstag der Anmeldung: 20.12.1995
(73) Patentinhaber: Hemscheidt Maschinentechnik Schwerin GmbH & Co., 19061 Schwerin (DE)
(72) Erfinder: Füller, Klaus, Dipl.-Ing., D-19061 Schwerin (DE); Siegert, Peter, Dr.-Ing., D-19063 Schwerin (DE); Holst, Jörg, Dipl.-Ing., D-19065 Raben-Steinfeld (DE)
(74) Vertreter: Jaap, Reinhard

(56) Entgegenhaltungen:
- EP-A- 0 554 068
- DE-U- 9 212 480
- FR-A- 2 516 857
- GB-A- 2 061 807

## Beschreibung

Die Erfindung betrifft eine holmlose Formschließeinrichtung für Spritzgießmaschinen, die aus einem c-förmigen Maschinenrahmen besteht, an dessen einem Schenkel eine feste Werkzeugaufspannplatte und an dessen anderem Schenkel eine Endplatte angeordnet sind. Dazwischen ist auf Führungen eine bewegliche Werkzeugaufspannplatte mit Hilfe eines Linearantriebes, der in der Endplatte und der beweglichen Werkzeugaufspannplatte gelagert ist, längsverschiebbar.
Die feste und die bewegliche Werkzeugaufspannplatte besitzen Aufspannflächen zur Aufnahme der Formhälften eines Formwerkzeuges. Die Schließ- und Aufreißkraft, die während des Einspritz- und Aufreißvorganges durch den Linearantrieb erzeugt wird, wird dabei vom Maschinenrahmen aufgenommen. Aus dem DE 9212480 U1 und der EP 0554068 A1 sind bereits gattungsgemäße holmlose Formschließeinrichtungen bekannt, deren Vorteil darin besteht, daß der Werkzeugraum zwischen der festen und der beweglichen Werkzeugaufspannplatte frei zugängig ist. Dadurch wird der Zugang zum Formwerkzeug und der Werkzeugwechsel gegenüber Formschließeinrichtungen, deren Werkzeugaufspannplatten durch Holme verbunden sind, wesentlich vereinfacht. Außerdem sind bei holmlosen Formschließeinrichtungen größere Formwerkzeuge durch eine bessere Ausnutzung der Werkzeugaufspannfläche auf Spritzgießmaschinen mit kleinerer Schließkraft einsetzbar. Die beim Einspritzvorgang wirkenden großen Schließ- und Formauftreibkräfte und die beim Aufreißvorgang wirkenden Formaufreißkräfte führen bei holmlosen Spritzgießmaschinen dazu, daß es zu einer Verformung des Maschinenrahmens kommt, die aus einer Längsdehnung und aus einer überlagerten Biegeverformung besteht, wobei letztere Unparallelitäten an der Werkzeugteilfuge hervorgerufen kann.

In dem DE 9212480 U1 und der EP 0554068 A1 wird das Problem dadurch gelöst, daß die beiden Werkzeugaufspannplatten horizontal einachsig gelagert bzw. kippbar sind, wodurch die Planparallelität beibehalten werden kann. Um ein Abheben der beweglichen Werkzeugaufspannplatte vom Maschinenrahmen zu verhindern, besitzt im DE 9212480 U1 die bewegliche Werkzeugaufspannplatte einen Gleitschuh, der formschlüssig mit einer Führungsschiene verbunden ist. Die Führungsschiene ist entweder einseitig an der festen Werkzeugaufspannplatte oder am Maschinenrahmen gelagert. Um eine elastische Bewegung zwischen der beweglichen Werkzeugaufspannplatte und der Führungsschiene zu gewährleisten, sind Federn zwischen dem Gleitschuh und der beweglichen Werkzeugaufspannplatte angeordnet oder die Führungsschiene ist mittels Federn am Maschinenrahmen befestigt. Der Nachteil dieser Lösung besteht darin, daß während des Einspritzens der Kunststoffmasse in die Kavität des Formwerkzeuges durch den großen herrschenden Werkzeuginnendruck und die einachsige Lagerung der beiden Werkzeugaufspannplatten eine Verformung der Werkzeugaufspann- platten im oberen und unteren Randbereich auftreten kann. In Abhängigkeit von der Formteilgeometrie und der Lage der Kavität im Formwerkzeug können diese Verformungen unter-schiedlich groß sein. Dabei kann es konstruktiv sogar notwendig sein, daß Kavitäten mit einer großen Oberfläche weit entfernt von der horizontalen Mittelachse in der äußeren oberen oder unteren Randzone vom Formwerkzeug angeordnet werden müssen. Um ein Auftreiben des Formwerkzeuges beim Ein- spritzvorgang zu verhindern und um die Herstellung qualitativ hochwertiger Formteile zu gewährleisten, müssen die Werk-zeugaufspannplatten mit zunehmender Größe der Aufspannfläche daher wesentlich dickwandiger dimensioniert werden.

Hinzu kommt, daß die Führungen für die Formwerkzeuge und die bewegliche Werkzeugaufspannplatte und die Lager für die Endplatte, die bewegliche und die feste Werkzeugaufspannplatte unterschiedlich belastet werden und dadurch einem schnellen Verschleiß unterliegen.
In der EP 0554068 A1 werden konstruktiv unterschiedliche gattungsgemäße Ausführungsformen beschrieben und dargestellt. Dabei sind die Endplatte und die feste Werkzeugaufspannplatte und teilweise auch die bewegliche Werkzeugaufspannplatte einachsig gelenkig gelagert. Die bei der Erzeugung der Schließ- und Aufreißkraft wirkenden Kräfte werden jedoch überwiegend von einer sogenannten Verriegelungsrichtung aufgenommen, die aus zwei in Längsrichtung angeordneten Platten besteht, in denen die Endplatte und die feste Werkzeugaufspannplatte gelenkig gelagert sind.
Die bewegliche Werkzeugaufspannplatte, die feste Werkzeugaufspannplatte und die Endplatte werden dabei auf dem Maschinengestell geführt bzw. abgestützt. Diese Lösung hat neben den bereits zuvor beschriebenen Nachteilen einen weiteren Nachteil, der darin besteht, daß durch die in Längsrichtung angeordneten Platten für die Verriegelungsvorrichtung ein zusätzlich hoher Material- und Kostenaufwand erforderlich ist.
Die Aufgabe der Erfindung besteht darin, eine Lösung zu finden, bei der die Schließ- und Aufreißkraft überwiegend vom Maschinenrahmen aufgenommen wird, bei der die Plattendurchbiegung durch asymmetrische Werkzeuginnendrücke und exzentrische Aufreißkräfte und die Belastung auf die Werkzeugführung reduziert wird und mit der die durch die Aufweitung des Maschinenrahmens normalerweise entstehenden geringen vorhandenen Unparallelitäten zwischen den Formhälften der Formwerkzeuge automatisch vermieden werden.
In Verbindung mit dem Oberbegriff des Patentanspruches 1 wird die Aufgabe dadurch gelöst, daß die feste Werkzeugaufspannplatte und die Endplatte in den Schenkeln des Maschinenrahmens jeweils in mindestens zwei horizontalen rechtwinklig zur Spritzachse verlaufenden Lagerachsen oberhalb und unterhalb der Spritzachse befestigt sind. Die Endplatte und die feste Werkzeugaufspannplatte sind dabei mit den unteren Lagerachsen über mindestens zwei elastisch verformbare Elemente so verbunden, daß die durch die auftretende Schließkraft bzw. Zuhaltekraft erzeugte Aufweitung des c-förmigen Maschinenrahmens durch eine definierte elastische Verformung der Elemente teilweise aufgenommen wird, so daß die Aufspannflächen der Werkzeugaufspannplatten ohne Winkelabweichung in Ihrer senkrechten Lage verbleiben.
Die Vorteile der erfindungsgemäßen holmlosen Formschließeinrichtung bestehen darin, daß durch die mehrachsige horizontale Lagerung der Endplatte und der festen Werkzeugaufspannplatte der ungehinderte Zugang zum Werkzeugraum der Formschließeinrichtung gewährleistet bleibt. Ferner wird die Biegesteifigkeit der beiden Werkzeugaufspannplatten erhöht. Dadurch ist es möglich, auch wesentlich größere Formwerkzeuge ohne eine Verstärkung der Werkzeugaufspannplatten mit asymmetrischen Kavitäten in einer holmlosen Formschließeinrichtung funktionssicher aufzunehmen.
Außerdem wird mit der gezielten Anordnung von elastisch verformbaren Elementen unterhalb der Spritzachse gewährleistet, daß vorhandene geringe Unparallelitäten zwischen den Formhälften der Formwerkzeuge automatisch mit einem geringen Kraftaufwand ausgeglichen werden. Dabei wird die Führungsgenauigkeit für die Werkzeugführungen nicht beeinträchtigt und ungewollte Austritte von Kunststoffschmelze an der Werkzeugteilfuge werden verhindert.
Gemäß der Erfindung ist es aber auch möglich, daß entweder die feste Werkzeugaufspannplatte oder die Endplatte im zugehörigen Schenkel des Maschinenrahmens in mindestens zwei horizontal verlaufenden Lagerachsen oberhalb und unterhalb der Spritzachse befestigt ist. Dementsprechend ist die feste Werkzeugaufspannplatte oder die Endplatte mit der unteren Lagerachse im Schenkel des Maschinenrahmens über mindestens ein derart elastisch verformbares Element verbunden, daß die durch die auftretende Schließkraft bzw. Zuhaltekraft erzeugte Aufweitung des c-förmigen Maschinenrahmens durch eine definierte elastische Verformung des Elementes bzw. der Elemente derart ausgeglichen wird, daß die Aufspannfläche der festen Werkzeugaufspannplatte oder die Aufspannfläche der beweglichen Werkzeugaufspannplatte und/oder die Endplatte in ihrer senkrechten Lage verbleibt.
Diese Lösung basiert auf der Erkenntnis, daß es zur Einhaltung der Parallelität ausreichen kann, nur die feste Werkzeugaufspannplatte oder nur die Endplatte erfindungsgemäß zu lagern, so daß die jeweils andere Platte eine weniger aufwendige Aufnahme im Maschinenrahmen haben kann. So ist in einer weiteren Ausführungsform der Erfindung vorgesehen, daß bei einer doppelachsigen Lagerung der festen Werkzeugaufspannplatte der Linearantrieb durch ein Gelenk einachsig im Maschinenrahmen aufgenommen wird und die bewegliche Werkzeugaufspannplatte und der Linearantrieb durch ein Gelenk, das vorzugsweise als Kugelgelenk ausgebildet ist, miteinander verbunden sind. Die zweiachsige Lagerung der festen Werkzeugaufspannplatte hat den Vorteil, daß sie keinen Freiheitsgrad zur Drehung besitzt also nicht kippbar oder schwenkbar ist. Durch die auftretende Schließkraft bzw. Zuhaltekraft erfolgt jedoch eine definierte elastische Verformung der Elemente, die so groß ist, daß aus der senkrechten Lage der Aufspannfläche von der festen Werkzeugaufspannplatte keine Winkelabweichung eintritt. Die Verformung der festen Werkzeugaufspannplatte ist somit an die Verformung des Maschinenrahmens gekoppelt. Durch die einachsige Lagerung des Linearantriebes und der beweglichen Werkzeugaufspannplatte besitzen diese einen begrenzten Freiheitsgrad zur Drehung und sind kippbar bzw. schwenkbar. Um ein Kippen der beweglichen Werkzeugaufspannplatte zu verhindern, besitzt diese an der Unterseite paarweise angeordnete Führungsrollen. Die Führungsrollen umgreifen Führungsschienen, die an der Innenseite vom Maschinenrahmen in Gelenken gelagert sind. Bei Einwirkung der Schließ- und Zuhaltekraft wird somit die bewegliche Werkzeugaufspannplatte von der Verformung des Maschinenrahmens abgekoppelt. Durch die Kombination dieser beiden Lösungsvarianten wird damit bei Einwirkung der Schließ- und Zuhaltekraft immer eine exakte Planparallelität der Formhälften des Formwerkzeuges in der Werkzeugtrennebene gewährleistet.
Eine andere Ausführungsform der Erfindung sieht vor, daß die feste Werkzeugaufspannplatte über ein Gelenk einachsig im Maschinenrahmen aufgenommen wird, während die bewegliche Werkzeugaufspannplatte und der Linearantrieb über ein Gelenk, das vorzugsweise ein Kugelgelenk ist, miteinander verbunden sind. Bei dieser Ausführungsform ist nur die Endplatte im zugehörigen Schenkel des Maschinenrahmens in mindestens zwei horizontalen rechtwinklig zur Spritzachse verlaufenden Lagerachsen oberhalb und unterhalb der Spritzachse befestigt. In diesem Fall ist die Endplatte mit der unteren Lagerachse im Schenkel des Maschinenrahmens über elastisch verformbare Elemente verbunden. Durch die auftretende Schließkraft bzw. Zuhaltekraft tritt eine definierte elastische Verformung der Elemente derart ein, daß die Wirkungslinie der Kraft des Linearantriebes bei einer Verformung des Maschinenrahmens nicht aus der Spritzachse ausweichen kann. Damit ist gewährleistet, daß bei Schließkrafteinwirkung die Kolbenstange des Linearantriebes von Querkräften entlastet wird und die Werkzeugführungen geschont werden. Bei dieser Ausführungsform haben sowohl die feste Werkzeugaufspannplatte als auch die bewegliche Werkzeugaufspannplatte durch die einachsige Lagerung bzw. durch das Kalottenlager mindestens einen Freiheitsgrad zum Kippen oder zum Drehen. Die Plattenparallelität in der Werkzeugtrennebene wird dabei durch folgende Maßnahmen gewährleistet.
Bei der Erzeugung der Schließ- und Aufreißkraft werden die beiden Werkzeugaufspannplatten mit den Formhälften des Formwerkzeuges einerseits von der Verformung des Maschinenrahmens abgekoppelt. Dadurch ist es erforderlich, daß die bewegliche Werkzeugaufspannplatte mit den Führungsschienen in analoger Weise wie zuvor beschrieben formschlüssig verbunden und darauf abrollbar ist. Außerdem sind im Bereich der festen Werkzeugaufspannplatte bei der zuletzt genannten Lösung die Führungsschienen unterhalb der festen Werkzeugaufspannplatte angeschraubt. Am anderen Ende, im Bereich der Endplatte hingegen sind die Führungsschienen über Gelenke mit dem Maschinenrahmen verbunden. Zum Dehnungsausgleich, infolge der Verformung des Maschinenrahmens durch Schließkrafteinwirkung, ist in jeder Führungsschiene ein Langloch vorhanden. Durch die doppelachsige Lagerung der festen Werkzeugaufspannplatte im Maschinenrahmen wird der Zugang zur nicht dargestellten Spritzdüse besser gewährleistet. Die doppelachsige Lagerung der Endplatte ist für einen besseren Zugang zu den Hydraulikanschlüssen des Linearantriebes von Vorteil.

In der weiteren Ausgestaltung der Erfindung liegen bei einer doppelachsigen Lagerung der festen Werkzeugaufspannplatte und der Endplatte die oberhalb der Spritzachse befindlichen Lagerachsen vorzugsweise auf einer oberen horizontalen Ebene und die unterhalb der Spritzachse befindlichen Lagerachsen vorzugsweise auf einer unteren horizontalen Ebene. Außerdem haben die oberen Lagerachsen und die unteren Lagerachsen vorzugsweise unterschiedliche Abstände zur Aufspannfläche der jeweiligen Werkzeugaufspannplatte.
Nach einer weiteren Ausgestaltung der Erfindung sind unterhalb und zwischen der Endplatte und der festen Werkzeugaufspannplatte beidseitig am Maschinenrahmen Führungsschienen angeordnet, die an ihren Enden über Gelenke mit dem Maschinenrahmen drehbeweglich verbunden sind. Die bewegliche Werkzeugaufspannplatte wird während der Öffnungs- und Schließbewegung auf den Führungsschienen längsverschiebbar geführt und abgestützt. Durch diese Art der Führung und Abstützung der beweglichen Werkzeugaufspannplatte werden die Führungen bei einer Verformung des Maschinenrahmens durch einseitige Auftreib- oder Aufreißkräfte nicht zusätzlich beansprucht. Die unterhalb der Spritzachse angeordneten elastisch verformbaren Elemente können gemäß Erfindung unterschiedlich ausgebildet sein. So sieht eine Ausführungsform vor, daß die elastisch verformbaren Elemente aus paarweise angeordneten Druckstäben bestehen, die an ihrem einen Ende mit der Endplatte bzw. der festen Werkzeugaufspannplatte lösbar verbunden sind und am jeweils anderen Ende mit den unterhalb der Spritzachse angeordneten Lagerachsen im Maschinenrahmen in Verbindung stehen. Eine andere Ausführungsform der elastisch verformbaren Elemente besteht aus Stützarmen, die im mittleren Bereich durch Ausfräsungen oder Ausnehmungen im Querschnitt vermindert sind. Die Stützarme sind in diesem Falle fester Bestandteil der Endplatte bzw. der festen Werkzeugaufspannplatte.
Die Ausgestaltung der Erfindung sieht auch vor, daß die Führungsschienen an ihren Enden beidseitig von jeder Seitenwand des Maschinenrahmens auf einem Bolzen gelenkig gelagert sind. Der Bolzen wird in Lagerbuchsen, die in den Seitenwänden des Maschinenrahmens angeordnet sind aufgenommen. Durch diese Anordnung und Lagerung der Führungsschienen wird erreicht, daß die bei der Erzeugung der Schließ- und Aufreißkraft auf den Maschinenrahmen wirkenden Verformungskräfte teilweise durch die Führungsschienen aufgenommen werden. Da die bewegliche Werkzeugaufspannplatte in einer Wälzführung oder einer Gleitführung auf der Führungsschiene verfahrbar ist, haben die auf den Maschinenrahmen wirkenden Verformungskräfte keinen Einfluß auf die Planparallelität zwischen der beweglichen Werkzeugaufspannplatte und der festen Werkzeugaufspannplatte. Die Wälzführung besteht dabei auf an der Unterseite von der beweglichen Werkzeugaufspannplatte jeweils in vertikalen und in horizontalen Lagerachsen gelagerten Rollen, die auf den Führungsschienen abrollbar sind.

Wird statt einer Wälzführung eine Gleitführung gewählt, so sind dazu an der Unterseite von der beweglichen Werkzeugaufspannplatte jeweils seitlich Nuten, die mit Gleitmaterial ausgekleidet sind, so angeordnet, daß sie die Führungsschienen umschließen.
Nachstehend wird die Erfindung in einem Ausführungsbeispiel erläutert. In den zugehörigen Zeichnungen ist dargestellt:
- Fig. 1: Holmlose Formschließeinrichtung in der Vorderansicht mit auswechselbaren elastisch verformbaren Elementen
- Fig. 2: Holmlose Formschließeinrichtung in der Vorderansicht mit fest angeordneten elastisch verformbaren Elementen
- Fig. 3: Holmlose Formschließeinrichtung mit elastisch ververformbaren Elementen zwischen der Endplatte und der beweglichen Werkzeugaufspannplatte
- Fig. 4: Holmlose Formschließeinrichtung mit doppelachsig gelagerter festen Werkzeugaufspannplatte und einachsig gelagerter Endplatte
- Fig. 5: Holmlose Formschließeinrichtung mit einachsig gelagerter fester Werkzeugaufspannplatte und doppelachsig gelagerter Endplatte
- Fig. 6: Draufsicht auf eine holmlose Formschließeinrichtung mit fest angeordneten elastisch verformbaren Elementen
- Fig. 7: Seitenansicht der holmlosen Formschließeinrichtung gemäß der Schnittlinie A-A in Figur 1
- Fig. 8: Teilschnitt durch die untere horizontale Ebene EHU im Bereich der festen Werkzeugaufspannplatte gemäß der Linie B-B in Figur 1
- Fig. 9: Schnitt gemäß der Linie C-C in Figur 2 mit einer Wälzführung für die bewegliche WErkzeugaufspannplatte
- Fig. 10: Schnitt gemäß der Linie C-C in Figur 2 mit einer Gleitführung für die bewegliche Werkzeugaufspannplatte
- Fig. 11: Schnitt gemäß der Linie D-D in Figur 4 mit einer anderen Wälzführung für die bewegliche Werkzeugaufspannplatte
- Fig. 12: Vergrößerte Einzelheit X gemäß Figur 4
- Fig. 13: Vergrößerte Einzelheit Y gemäß Figur 5
- Fig. 14: Holmlose Formschließeinrichtung in der Schließstellung mit übertrieben dargestellter Verformung des Maschinenrahmens

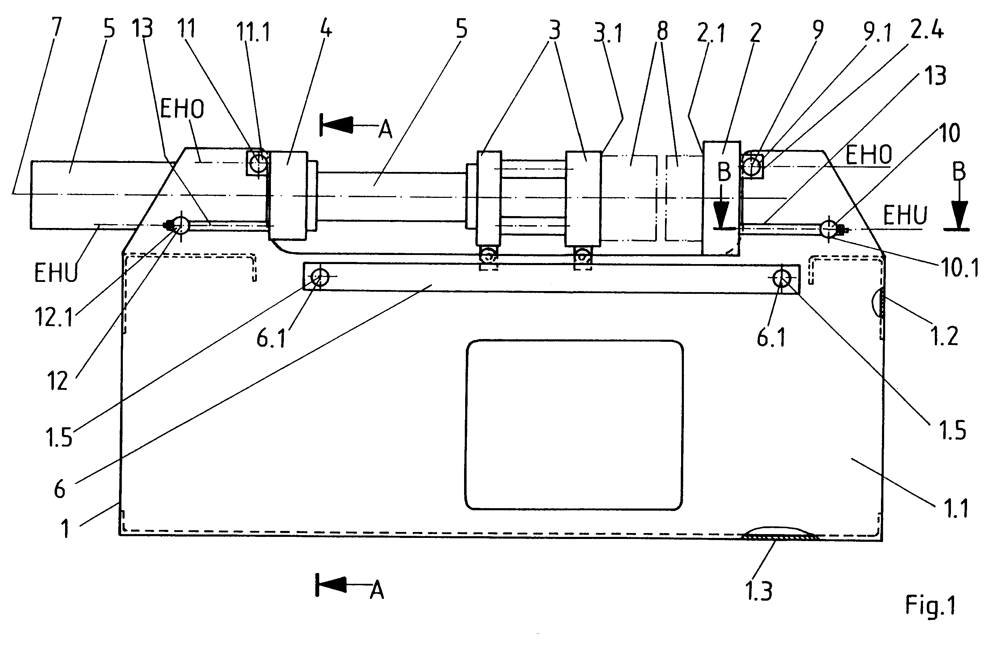

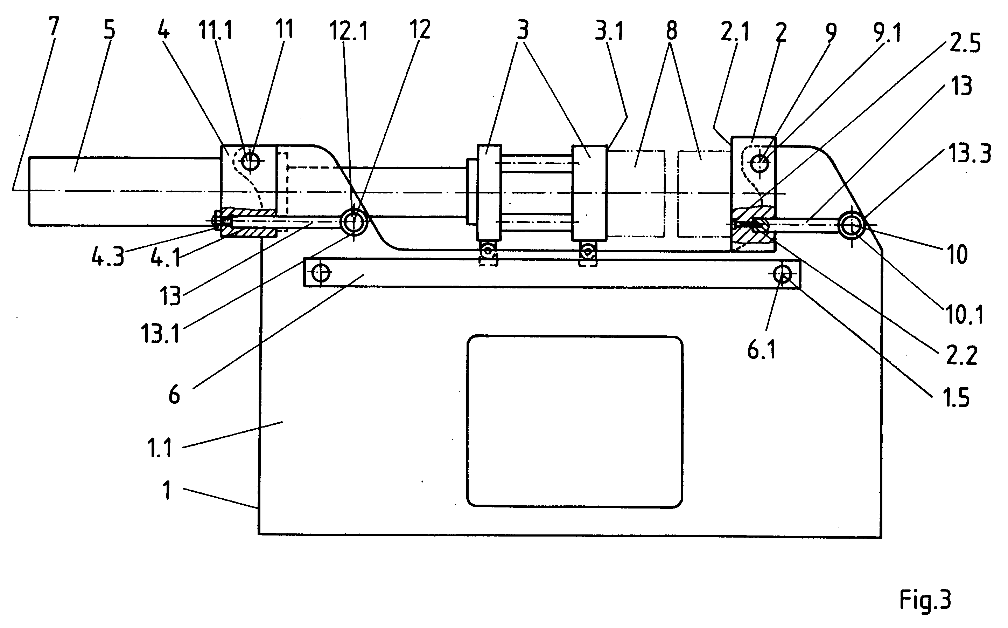

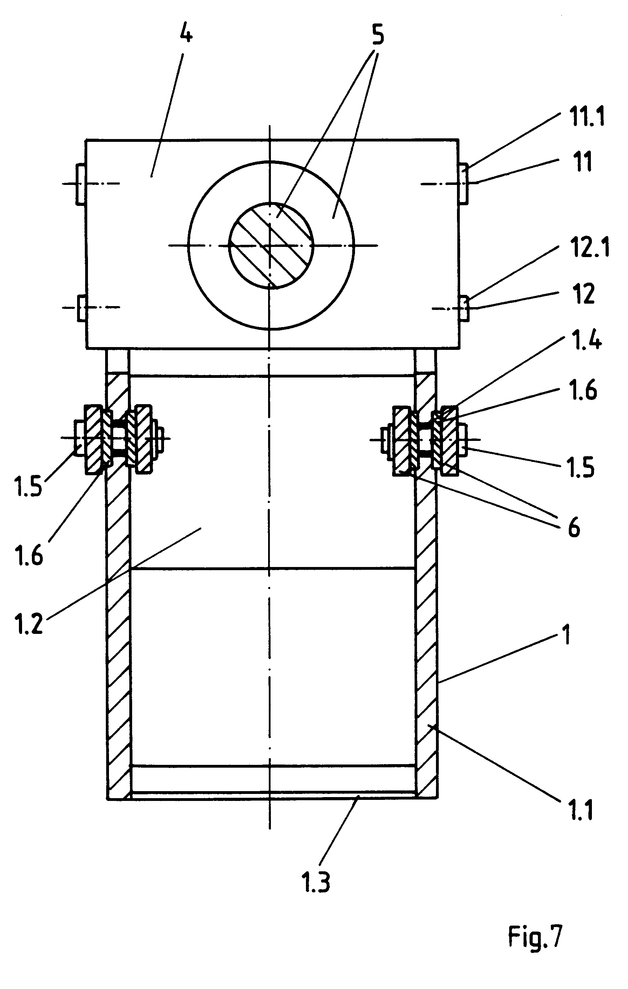

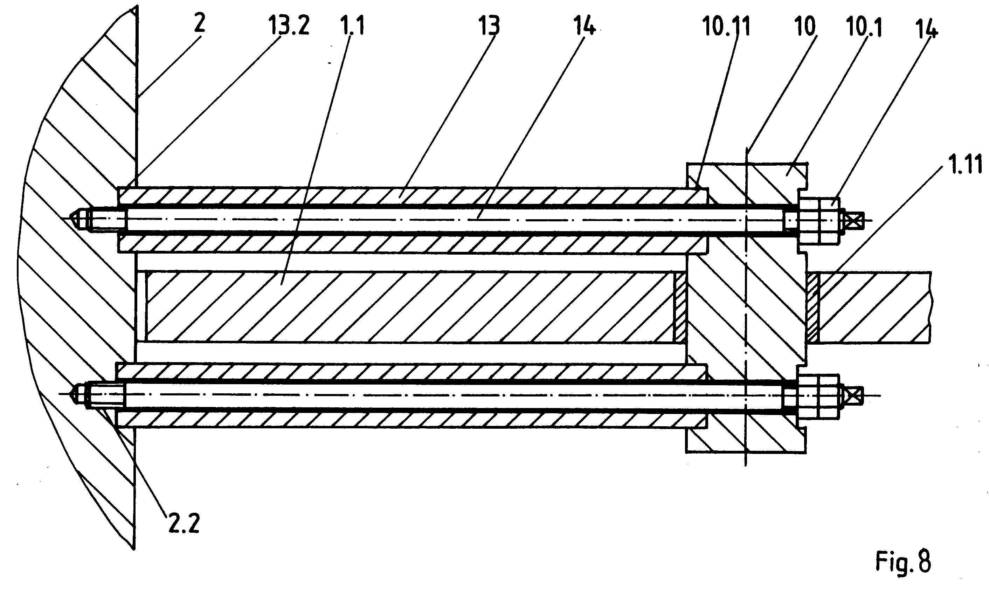

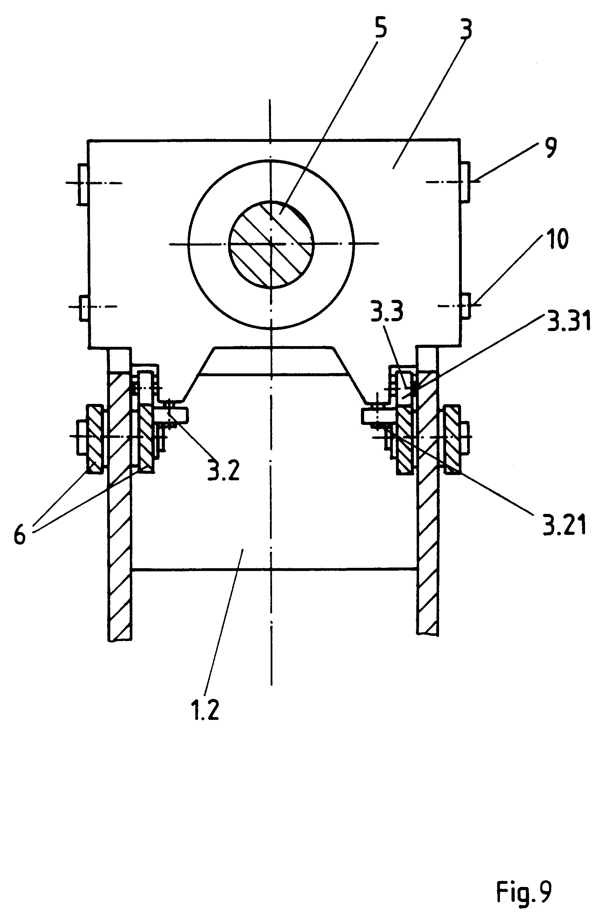

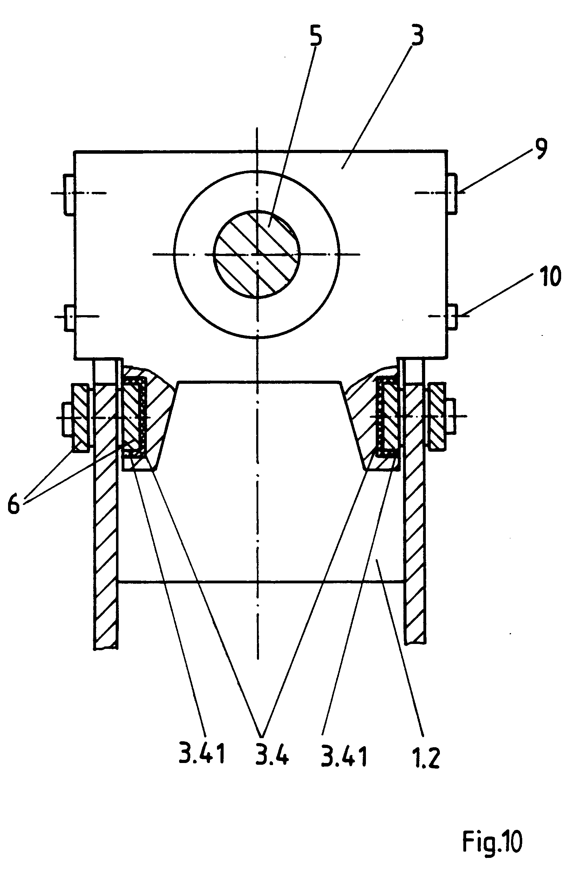

Die in Figur 1 dargestellte holmlose Formschließeinrichtung besteht aus dem c-förmigen Maschinenrahmens 1, an dessen einem Schenkel die feste Werkzeugaufspannplatte 2 und an dessen anderem Schenkel die Endplatte 4 angeordnet sind. Im Ausführungsbeispiel wird der Maschinenrahmen 1 von zwei Seitenwänden 1.1 gebildet, die durch Abstandshalter 1.2 und einen Boden 1.3 miteinander verbunden sind. Zwischen der festen Werkzeugaufspannplatte 2 und der Endplatte 4 ist auf Führungsschienen 6 die bewegliche Werkzeugaufspannplatte 3 mit Hilfe des Linearantriebes 5 verschiebbar. Der Linearantrieb 5 besteht aus einem hydraulischen Arbeitszylinder und ist in der Endplatte 4 und der beweglichen Werkzeugaufspannplatte 3 gelagert. Mit Hilfe einer hydraulischen Steuerung, die nicht Gegenstand der Erfindung ist, wird gleichzeitig durch den hydraulischen Arbeitszylinder die notwendige Schließ- und Aufreißkraft für das Schließen und Öffnen der Formhälften vom Formwerkzeug 8 erzeugt. Die feste und die bewegliche Werkzeugaufspannplatte 2 bzw. 3 besitzen zur Aufnahme der Formhälften des Formwerkzeuges 8 entsprechende Aufspannflächen 2.1 bzw. 3.1. Die feste Werkzeugaufspannplatte 2 wird in den horizontalen Lagerachsen 9 und 10 und die Endplatte 4 in den horizontalen Lagerachsen 11 und 12, die im Bereich der Schenkel des Maschinenrahmens angeordnet sind, aufgenommen. Alle Lagerachsen 9, 10, 11 und 12 sind rechtwinklig zur Spritzachse 7 angeordnet und haben vorzugsweise unterschiedliche Abstände zu den Aufspannflächen 2.1 bzw. 3.1 der jeweiligen Werkzeugaufspannplatte 2 bzw. 3.

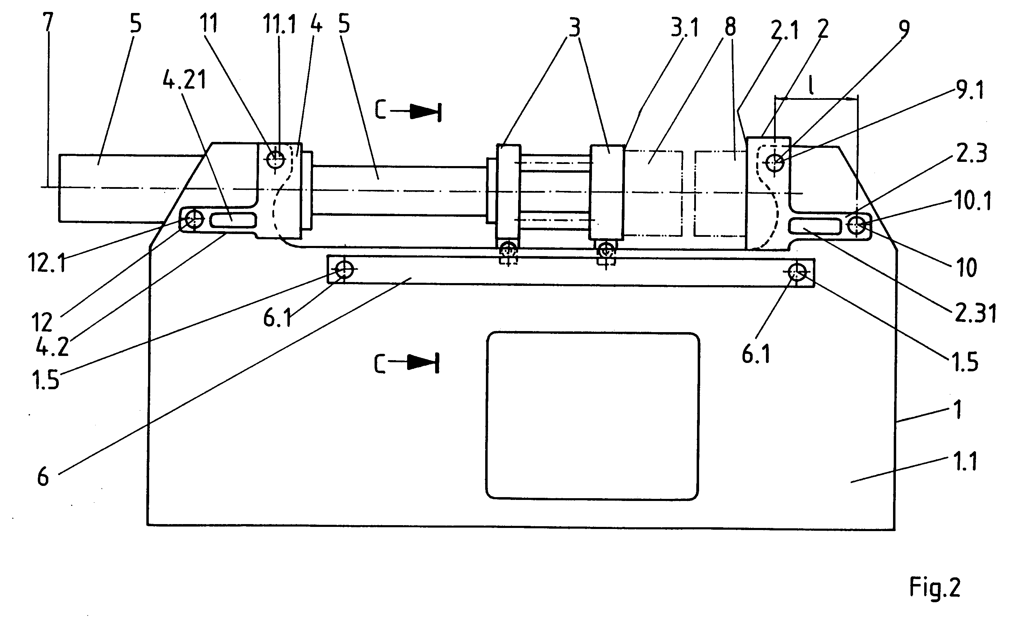

In den Figuren 1 und 2 sind die unteren horizontalen Lagerachsen 10 und 12 so angeordnet, daß sie einen größeren Abstand zu den Aufspannflächen 2.1 und 3.1 haben und in einer unteren horizontalen Ebene EHU liegen, während die oberen horizontalen Lagerachsen 9 und 11 einen kleineren Abstand haben und in einer oberen horizontalen Ebene EHO liegen.
In einem vergrößerten Teilschnitt ist in Fig. 8 die untere horizontale Ebene EHU mit der Lagerachse 10 für die feste Werkzeugaufspannplatte, gemäß der Linie B-B in Figur 1 dargestellt. Die Lagerachse 10 besteht aus einem Bolzen 10.1, der in einer Lagerbuchse 1.11, die in der Seitenwand 1.1 vom Maschinenrahmen 1 angeordnet ist, aufgenommen wird. Beidseitig von jeder Seitenwand 1.1 befinden sich Druckstäbe 13, die als hohlzylindrischer Körper ausgebildet sind und in Aussenkungen 13.2 an der festen Werkzeugaufspannplatte 2 und in Aussenkungen 10.11 am Bolzen 10.1 zentriert und abgestützt werden. Durch eine Schraubverbindung 14 sind die hohlzylindrischen Druckstäbe 13 zwischen der festen Werkzeugaufspannplatte 2 und dem Bolzen 10 lösbar befestigt. Die in Figur 1 dargestellte obere Lagerachse 9 für die feste Werkzeugaufspannplatte 2 besteht aus einem Bolzen 9.1, der in einem angedeuteten Lagerbock 2.4 gelagert ist. Der Lagerbock 2.4 ist an der festen Werkzeugaufspannplatte 2 befestigt und auf dem Bolzen 9.1 ist die feste Werkzeugaufspannplatte 2 gegenüber den Seitenwänden 1.1 vom Maschinenrahmen 1 drehbeweglich gelagert.
Die Ausbildung und Anordnung der beiden Lagerachsen 11 und 12 zur Aufnahme der Endplatte 4 im Maschinenrahmen 1 erfolgt in analoger Weise.
In Abhängigkeit von der Größe der Werkzeugaufspannfläche 2.1 sind zwischen der Aufspannfläche 2.1 von der festen Werkzeugaufspannplatte 2 und der unterhalb der Spritzachse 7 angeordneten Lagerachse 10 mindestens zwei paarweise elastisch verformbare Elemente angeordnet. Mindestens zwei weitere paarweise elastisch verformbare Elemente sind zwischen der Aufspannfläche 3.1 von der beweglichen Werkzeugaufspann-platte 3 und der unterhalb der Spritzachse 7 angeordneten Lagerachse 12 von der Endplatte 4 vorhanden. Die elastisch verformbaren Elemente können, wie aus den Figuren 1, 2 und 3 ersichtlich ist, unterschiedlich ausgebildet sein, wobei sie jedoch gegenüber den Schenkeln des Maschinenrahmens 1 einen geringeren Querschnitt aufweisen müssen, um eine größere elastische Verformung zu gewährleisten, wenn die Schließ- und Aufreißkräfte bzw. die Auftreibkräfte im Formwerkzeug wirksam sind,
In Figur 2 ist eine Ausführungsform für die elastisch verformbaren Elemente dargestellt, in der diese ein fester Bestandteil der Endplatte 4 bzw. der festen Werkzeugaufspannplatte 2 sind. Dazu sind an der Rückseite der festen Werkzeugaufspannplatte 2 und der Endplatte 4 jeweils Stützarme 2.3 bzw. 4.2 angeschweißt oder angegossen.
Die Stützarme 2.3 bzw. 4.2 sind in ihrem mittleren Bereich durch Ausnehmungen bzw. Ausfräsungen 2.31 bzw. 4.21 in ihrem Querschnitt so verjüngt, daß sie eine elastische Knautschzone bilden und gegenüber den Schenkeln des Maschinenrahmens 1 stärker elastisch verformbar sind.
Eine andere günstige Ausführungsform bezüglich der Gestaltung und Anordnung der elastisch verformbaren Elemente ist in Figur 3 dargestellt. Aus der Figur 3 ist erkennbar, daß die unterhalb der Spritzachse 7 angeordnete Lagerachse 12 für die Endplatte 4 zwischen der Aufspannfläche 3.1 für die bewegliche Werkzeugaufspannplatte 3 und der Endplatte 4 angeordnet ist. Das elastisch verformbare Element befindet sich in dieser Anordnung zwischen der Endplatte 4 und der unterhalb der Spritzachse 7 angeordneten Lagerachse 12. Die in Figur 3 dargestellte Anordnung hat den Vorteil, daß der Rahmen der Formschließeinrichtung gegenüber den in Figur 1 und 2 dargestellten Ausführungsformen eine kürzere Baulänge hat.
Als elastische Elemente sind in der Ausführungsform gemäß Figur 3 paarweise vollzylindrische Druckstäbe 13 bzw. Zugstäbe dargestellt, für die eine andere Befestigung vorgesehen ist. An der Seite von der Aufspannfläche 2.1 der festen Werkzeugaufspannplatte 2 bzw. der Rückseite von der Endplatte 4 wird jeder Druckstab 13 durch eine lösbare Schraubverbindung 2.5 bzw. 4.3, die in der Stufenbohrung 2.2 bzw. 4.1 von der festen Werkzeugaufspannplatte 2 bzw. der Endplatte 4 angeordnet sind, befestigt. Am jeweils anderen Ende besitzt jeder Druckstab 13 ein Lagerauge 13.3. In dieses Lagerauge 13.3 ist jeweils ein normaler Bolzen 10.1 bzw. 12.1 mit Kopf ohne eine Aussenkung 10.11 einsteckbar, der die Lagerachse 10 bzw. 12 bildet. Jeder Bolzen 10.1 bzw. 12.1 ist in einer Lagerbuchse 1.11, die im Maschinengestell 1 angeordnet ist, drehbar gelagert. Bei der Beschreibung der Figur 8 wurde die Lageranordnung bereits teilweise erläutert. Die abweichende Anordnung der Lagerachse 12 in Figur 3 hat zur Folge, daß im Druckstab 13 bei der Schließkrafterzeugung keine Druckkräfte sondern in diesem Falle Zugkräfte wirken. Es ist jedoch auch möglich, bei dieser Ausführungsform statt der Druckstäbe 13 elastische Stützarme 2.3 und 4.2 an der festen Werkzeugaufspannplatte 2 bzw. an der Endplatte 4 vorzusehen.
Unterhalb und zwischen der Endplatte 4 und der festen Werkzeugaufspannplatte 3 sind beidseitig an jeder Seitenwand 1.1 vom Maschinenrahmen 1 Führungsschienen 6 angeordnet, die an ihren Enden über Gelenke 6.1 mit dem Maschinenrahmen 1 verbunden sind. In Figur 7 ist entsprechend der Schnittdarstellung gemäß der Linie A-A in Figur 1 eine Ausführungsform dargestellt. Jedes Gelenk 6.1 besteht aus einem Bolzen 1.5, der in einer Buchse 1.4, die in der Seitenwand 1.1 vom Maschinenrahmen 1 angeordnet ist, gelagert ist. Beidseitig von jeder Seitenwand 1.1 befinden sich Distanzscheiben 1.6,
durch die die auf dem Bolzen 1.5 angeordneten Führungsschienen 6 gegenüber dem Maschinenrahmen 1 auf Abstand gehalten werden.
Jeder Bolzen 1.5 wird durch nicht näher bezeichnete Sicherungselemente gesichert. In den Figuren 9 und 10 ist gemäß der Schnittlinie C-C in Figur 2 abwechselnd eine Wälzführung und eine Gleitführung für die bewegliche Werkzeugaufspannplatte 3 dargestellt. In Figur 9 besitzt die bewegliche Werk- zeugaufspannplatte 3 an der Unterseite beidseitig eine abge-winkelte Kontur. Die Kontur ermöglicht es, Rollen 3.21 in einer vertikalen Lagerachse 3.2 und Rollen 3.31 in einer horizontalen Lagerachse 3.3 drehbeweglich so anzuordnen und zu lagern, daß bei einer Verfahrbewegung der beweglichen Werkzeugaufspannplatte 3 diese auf den Führungsschienen 6 abrollen kann und abgestützt wird.
Statt einer Wälzführung kann ebenso eine Gleitführung zur Führung und Abstützung der beweglichen Werkzeugaufspannplatte 3 auf den Führungsschienen 6 vorgesehen werden. Dazu befinden sich dann an der Unterseite von der beweglichen Werkzeugaufspannplatte 3 seitlich eingefräste Nuten 3.4, die allseitig mit Gleitmaterial 3.41 ausgekleidet sind und die Führungsschienen 6, die sich an der Innenseite vom Maschinenrahmen 1 befinden, an drei Seiten umschließen.

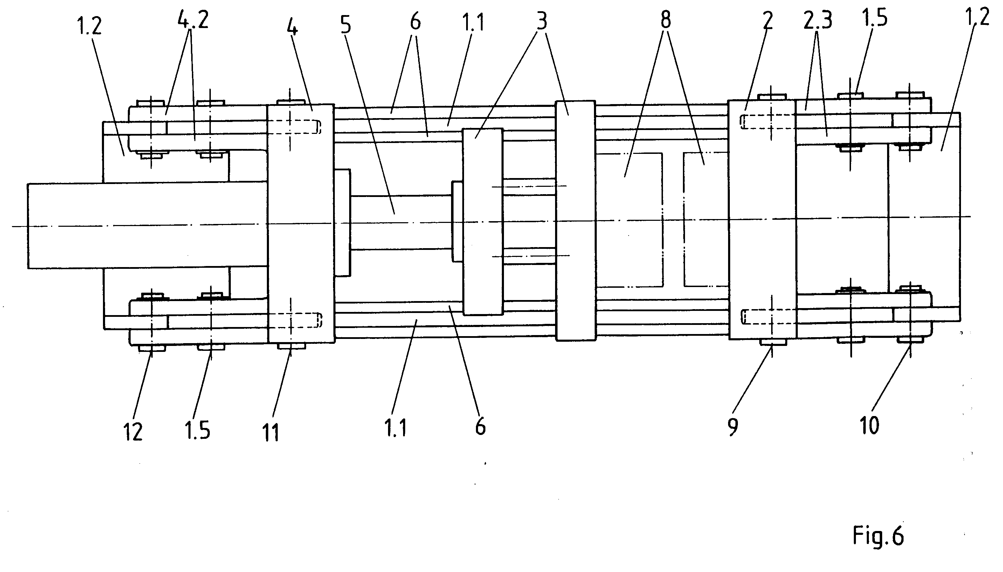

In Figur 6 wurde eine erfindungsgemäße Formschließeinrichtung in der Draufsicht dargestellt. Es ist erkennbar, daß an der Endplatte 4 und der festen Werkzeugaufspannplatte 2 die elastisch verformbaren Elemente aus Stützarmen 4.2 und 2.3 bestehen, die angegossen oder angeschweißt sind und Bestandteil der Endplatte oder der festen Werkzeugaufspannplatte sind. Es ist ferner erkennbar, daß gegenüber bekannten holmlosen Formschließeinrichtungen der Materialeinsatz für die Formschließeinrichtung reduziert werden konnte.

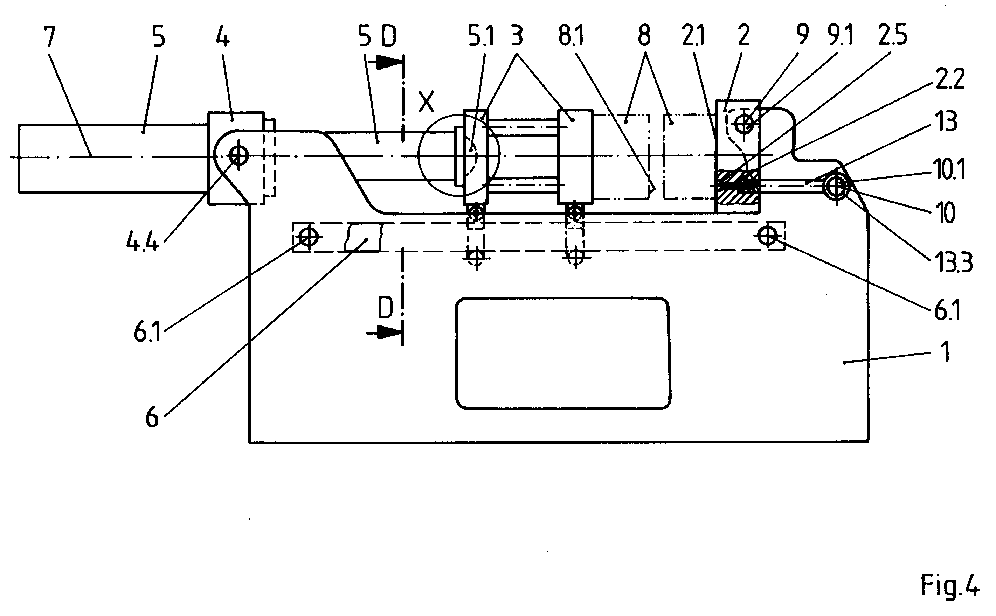

In Figur 4 ist in der Vorderansicht eine holmlose Formschließeinrichtung erkennbar, bei der nur die feste Werkzeugaufspannplatte 2 im rechten Schenkel des c-förmigen Maschinenrahmens 1 in den beiden Lagerachsen 9 und 10, die als Bolzen 9.1 und 10.1 ausgebildet sind, aufgenommen wird.
Die Lagerachse 9 befindet sich oberhalb und die Lagerachse 10 unterhalb der Spritzachse 7. Beide Lagerachsen 9 und 10 haben unterschiedliche Abstände zur Werkzeugaufspannfläche 2.1. Der Bolzen 9.1 ist in einer nicht dargestellten Lagerbuchse im Maschinenrahmen 1 gelagert und nimmt im oberen Bereich die feste Werkzeugaufspannplatte 2 auf. Die unterhalb der Spritzachse 7 angeordneten Druckstäbe 13 besitzen am rechten Ende ein Lagerauge 13.3, in das der Bolzen 10.1 einsteckbar ist, und von einer nicht dargestellten Lagerbuchse im Maschinenrahmen 1 aufgenommen wird. Der Druckstab 13 ist an seinem anderen Ende in eine Stufenbohrung 2.2, die sich in der festen Werkzeugaufspannplatte 2 befindet, einsteckbar. Durch eine Schraubverbindung 2.5, die von der Seite betätigt wird, an der sich die Werkzeugaufspannfläche 2.1 befindet, wird der Druckstab 13 einstellbar befestigt. Die feste Werkzeugaufspannplatte 2 ist somit nicht um eine Achse kippbar. Statt dessen wird sie bei Einwirkung der Schließ- und Aufreißkraft, durch die unterhalb der Spritzachse 7 angeordneten elastischen Elemente 13, die aus Druckstäben bestehen, ebenfalls elastisch verformt. Diese elastische Verformung, die parallel mit der Aufweitung des c-förmigen Maschinenrahmens 1 eintritt, hat zur Folge, daß auf die senkrechte Lage der Werkzeugaufspannfläche 2.1 der festen Werkzeugaufspannplatte 2 keine Winkelabweichung durch die Verformung des Maschinenrahmens 1 übertragbar ist. Damit ist die Verformung der festen Werkzeugaufspannplatte 2 an die Verformung des Maschinenrahmens 1 gekoppelt. Im Gegensatz dazu ist der Linearantrieb 5, der aus einem Arbeitszylinder besteht, im Maschinenrahmen 1 direkt über ein Gelenk 4.4 oder über die Endplatte 4 und ein Gelenk 4.4 drehbeweglich gelagert. Die Kolbenstange des Arbeitszylinders 5 ist mit der beweglichen Werkzeugaufspannplatte 3 ebenfalls über ein Gelenk 5.1 verbunden, das im Ausführungsbeispiel als Kalottenlager ausgebildet ist.

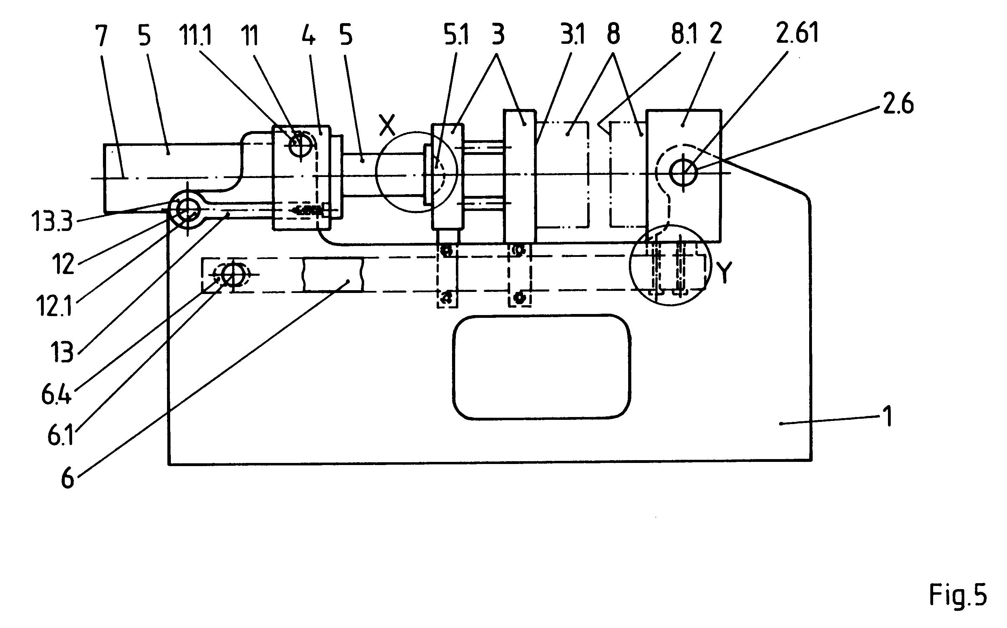

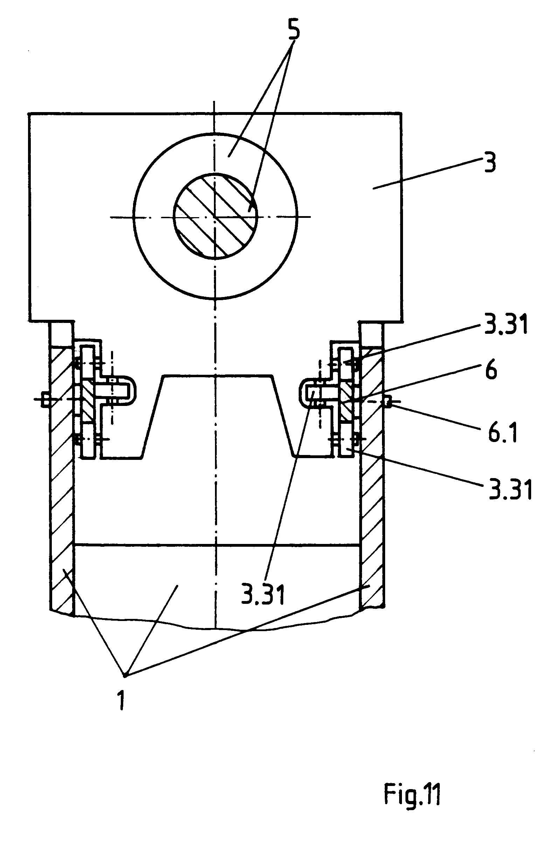

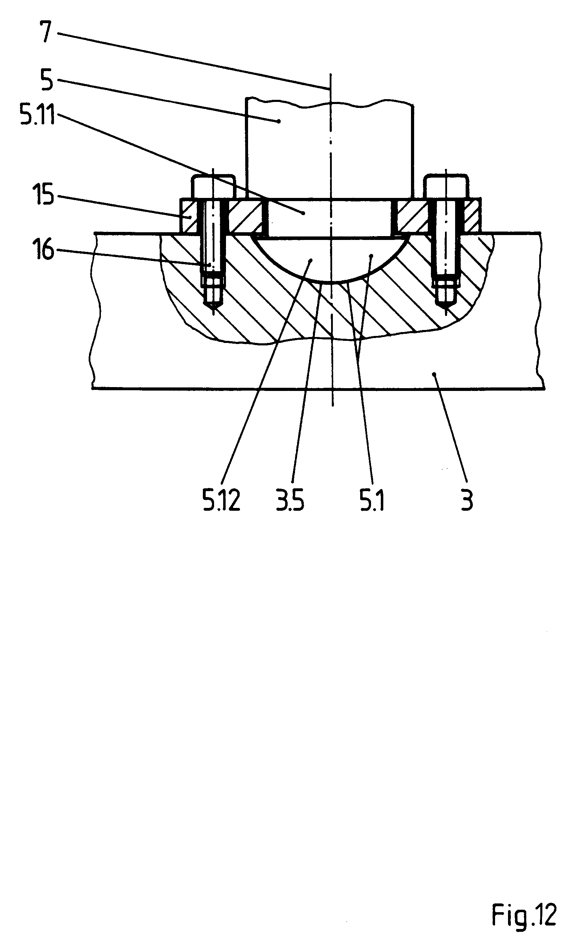

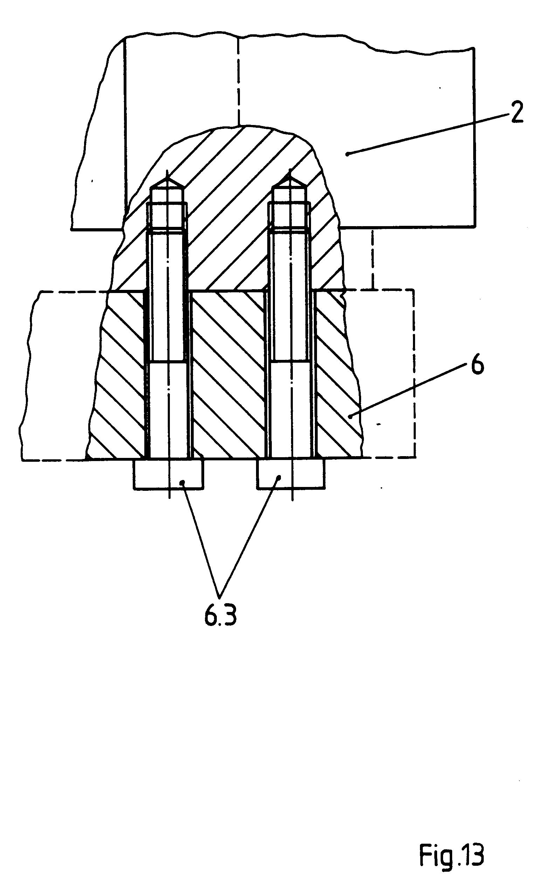

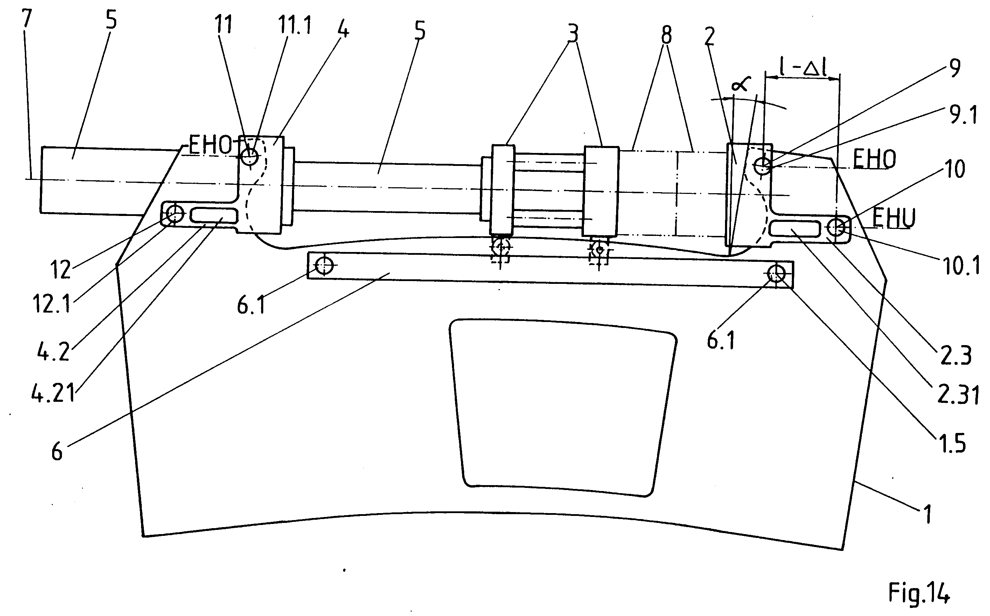

In Figur 12 ist eine vergrößerte Einzelheit des Gelenkes 5.1 in der Ausführung als Kalottenlager erkennbar. Die Kolbenstange des Arbeitszylinders 5 besitzt am Ende eine Ringnut 5.11, an die sich stirnseitig ein Gelenkkopf 5.12 anschließt. In der beweglichen Werkzeugaufspannplatte 3 befindet sich eine kalottenförmige Ausnehmung 3.5. Der Gelenkkopf 5.12 der Kolbenstange vom Arbeitszylinder 5 liegt an der kalottenförmigen Ausnehmung 3.5 an, ist darin drehbeweglich und ist durch einen geteilten Ringflansch 15 und eine Schraubverbindung 16 mit der beweglichen Werkzeugaufspannplatte 3 lösbar verbunden. Im Vergleich zur festen Werkzeugaufspannplatte 2 werden durch die gelenkige Lagerung der Endplatte 4 bzw. des Linearantriebes 5 im Maschinenrabmen 1 einerseits sowie die gelenkige Verbindung zwischen der beweglichen Werkzeugaufspannplatte 3 und der Kolbenstange des Linearantriebes 5 andererseits, diese bei der Verformung des Maschinenrahmens 1 durch die Formauftreibkräfte bei der Schließkrafteinwirkung von dessen Verformung abgekoppelt. Dazu ist jedoch außerdem eine sichere Führung der beweglichen Werkzeugaufspannplatte 3 gegenüber der festen Werkzeugaufspannplatte 2 erforderlich. In Figur 11 ist in einer Schnittdarstellung gemäß der Linie D-D in Figur 4 eine mögliche Ausführungsform für die Führung der beweglichen Werkzeugaufspannplatte 3 erkennbar. An den beiden Innenseiten vom Maschinenrahmen 1 sind im Abstand dazu die Führungsschienen 6 angeordnet, die an ihren Enden in Gelenken 6.1 gelagert sind. Oberhalb, unterhalb und seitlich liegen an den Führungsschienen 6 Rollen 3.31 an, die in der beweglichen Werkzeugaufspannplatte 3 einstellbar gelagert sind.
Eine andere, gegenüber der Figur 4 teilweise umgekehrte Ausführungsform, ist aus Figur 5 ersichtlich. In diesem Beispiel wird die Endplatte 4 mit dem Linearantrieb 5 in der oberen Lagerachse 11 und der unteren Lagerachse 12 die als Bolzen 11.1 und 12.1 ausgebildet sind im Maschinenrahmen 1 aufgenommen. Die elastisch verformbaren Druckstäbe 13 besitzen am linken Ende ein Lagerauge 13.3, in das der Bolzen 12.1 einsteckbar ist und von einer nicht dargestellten Lagerbuchse im Maschinenrahmen 1 aufgenommen wird. Der Druckstab ist an seinem anderen Ende analog in eine Stufenbohrung, die sich in der Endplatte 4 befindet, einsteckbar und durch eine Schraubverbindung mit der Endplatte 4 einstellbar verbunden. Durch die elastisch verformbaren Druckstäbe 13 ist die Endplatte 4 in entsprechender Weise an die elastische Verformung des Maschinenrahmens 1 gekoppelt, wobei die Winkeländerung durch die Druckstäbe 13 kompensiert wird. Um die Kolbenstange des Arbeitszylinder 5 bei der Schließkrafterzeugung von möglichen Querkräften zu entlasten und die nichtdargestellten Werkzeugführungen des Formwerkzeuges 8 zu schonen, sind die Kolbenstange und die bewegliche Werkzeugaufspannplatte 3 ebenfalls durch ein Gelenk 5.1 miteinander verbunden. Durch das Gelenk 5.1 wird außerdem die Kolbenstangenführung geschont, da damit eine statische Überbestimmung durch eine Dreifachlagerung verhindert wird. Die gegenüberliegende feste Werkzeugaufspannplatte 2 ist in diesem Beispiel beidseitig in Gelenken 2.6 um eine Achse 2.61 kippbar im Maschinenrahmen 1 gelagert. Unterhalb der festen Werkzeugaufspannplatte 2 sind die Führungsschienen 6 an der Innenseite vom Maschinenrahmen 1 durch Schraubverbindungen 6.3 lösbar miteinander befestigt. In Figur 13 ist dazu eine vergrößerte Einzelheit dargestellt. Am anderen Ende des Maschinenrahmens 1 sind die Führungsschienen 6 in einem Gelenk 6.1 aufgenommen. Bei der Verformung des Maschinenrahmens 1 durch die Formauftreibkräfte gleitet das Gelenk 6.1 in einem kurzen Langloch 6.4, das sich in jeder Führungsschiene 6 befindet. Damit ist die vollständige Entkopplung der festen Werkzeugaufspannplatte 2, der beweglichen Werkzeugaufspannplatte 3 sowie der Führungsschienen 6 von der elastischen Verformung des Maschinenrahmens 1 gewährleistet. Im Gegensatz dazu wird die elastische Verformung des Maschinenrahmens 1 auf die Endplatte 4 mit den elastisch verformbaren Elementen 13 vollständig übertragen und durch diese derart kompensiert, daß die horizontale Lage des Linearantriebes 5 nicht verändert wird. Bei Einwirkung der Formauftreibkräfte ist somit auch bei dieser Ausführungsvariante eine genaue Parallelität der Formhälften des Formwerkzeuges 8 in der Werkzeugtrennebene 8.1 gewährleistet.
Nachstehend wird die Wirkungsweise der erfindungsgemäßen Lösung anhand der in der Figur 14 dargestellten Formschließeinrichtung erläutert. In der gezeigten Schließstellung wird beim Aufbau der Schließkraft durch den Linearantrieb 5 der Maschinenrahmen 1, wie hier übertrieben dargestellt ist, verformt. Durch den Kraftangriff oberhalb der nicht dargestellten neutralen Faser kommt es zu einer Längsdehnung des Maschinenrahmens und zu einer überlagerten Biegeverformung. Dabei neigen sich der obere rechte und linke Abschnitt vom Maschinenrahmen 1 um den Winkel α nach außen. Das führt dazu, daß die Bolzen 9.1 und 10.1 bzw. 11.1 und 12.1, die senkrecht einen Abstand l zueinander haben, sich horizontal um den Betrag Δl einander annähern. Im Zusammenwirken beider Lagerachsen 9, 10 bzw. 11, 12 wird ein Freiheitsgrad der festen Werkzeugaufspannplatte 2 bzw. der Endplatte 4 vermieden. Dadurch wird die gesamte Schenkelneigung des Maschinenrahmens 1 in der Verbindungslinie zwischen den Lagerachsen 9, 10 auf die jeweilige Platte 2, 4 übertragen. Im elastischen Teil der Platte wird durch die Stützarme 2.3 und 4.2 diese Neigung kompensiert. Bei einer nicht erfindungsgemäßen Lagerung der festen Werkzeugaufspannplatte 2 und der Endplatte 4 würde sich automatisch auch eine Neigung der festen Werkzeugaufspannplatte 2 und der Endplatte 4 um den gleichen Winkelbetrag ergeben. Dadurch käme es zu einer Öff-nung des Formwerkzeuges, zu einem ungewollten Masseaustritt und/oder eine Zerstörung der Werkzeugführungen könnte ein-treten. Durch die elastisch verformbaren Elemente, die in Figur 14 aus den angegossenen Stützarmen 2.3 und 4.2 bestehen und durch Ausfräsungen 2.31 und 4.21 in ihrem Querschnitt vermindert sind, werden die Stützarme 2.3 und 4.2 um den Betrag Δl elastisch zusammengestaucht. Dadurch wird erreicht, daß die Neigung des Maschinenrahmens 1 nicht auf die Werkzeugaufspannfläche 2.1 der festen Werkzeugaufspannplatte 2 übertragen wird. Außerdem wird die elastische Verformung des Maschinenrahmens 1 auf die Endplatte 4 mit den elastisch verformbaren Stützarmen 4.2 vollständig übertragen und durch diese derart kompensiert, daß die horizontale Lage des Linearantriebes 5 nicht verändert wird.
Da die Verformung des Maschinenrahmens 1 und der elastisch verformbaren Elemente stets proportional zur aufgebrachten Schließkraft ist, bleibt die Planparallelität der beiden Formhälften vom Formwerkzeug 8 bei der Wirkung jeder Größe der Schließkraft und der Aufreißkraft erhalten. Ferner kann durch die gelenkige Lagerung der Führungsschienen 6 in zwei Achsen auf den Bolzen 1.5 die Verformung des Maschinenrahmens 1 keine Verbiegung der Führungsschienen 6 hervorrufen, so daß deren horizontale Lage für die Führung der beweglichen Werkzeugaufspannplatte 3 erhalten bleibt.

## Patentansprüche

1. Holmlose Formschließeinrichtung für Spritzgießmaschinen, bestehend aus einem c-förmigen Maschinenrahmen (1), an dessen einem Schenkel eine feste Werkzeugaufspannplatte (2) und an dessen anderem Schenkel eine Endplatte (4) angeordnet sind, dazwischen auf Führungen eine bewegliche Werkzeugaufspannplatte (3), die gegen die feste Werkzeugaufspannplatte in Richtung einer Spritzachse mit Hilfe eines Linearantriebes (5), der in der Endplatte und der beweglichen Werkzeugaufspannplatte gelagert ist, längsverschiebbar ist, die feste und die bewegliche Werkzeugaufspannplatte senkrecht zur Spritzachse ausgerichtete Aufspannflächen (2.1, 3.1) zur Aufnahme der Formhälften eines Formwerkzeuges besitzen und die Schließ- und Aufreißkraft, die während des Einspritz- und Aufreißvorganges durch den Linearantrieb erzeugt wird, vom Maschinenrahmen aufgenommen wird, dadurch gekennzeichnet, daß die feste Werkzeugaufspannplatte (2) und die Endplatte (4) in den zugehörigen Schenkeln des Maschinenrahmens (1) jeweils in mindestens zwei horizontal verlaufenden Lagerachsen (9, 10, 11, 12) oberhalb und unterhalb der Spritzachse (7) befestigt sind, wobei die Endplatte (4) und die feste Werkzeugaufspannplatte (2) mit den unteren Lagerachsen (10, 12) je über mindestens ein elastisch verformbares Element (13) so verbunden sind, daß die durch die auftretende Schließkraft bzw. Zuhaltekraft erzeugte Aufweitung des c-förmigen Maschinenrahmens (1) durch eine definierte elastische Verformung der Elemente (13) teilweise aufgenommen wird, so daß die Aufspannflächen (2.1, 3.1) der Werkzeugaufspannplatten (2, 3) ohne Winkelabweichung in ihrer senkrechten Lage verbleiben.

2. Holmlose Formschließeinrichtung für Spritzgießmaschinen bestehend aus einem c-förmigen Maschinenrahmen (1), an dessen einem Schenkel eine feste Werkzeugaufspannplatte (2) und an dessen anderem Schenkel eine Endplatte (4) angeordnet sind, dazwischen auf Führungen eine bewegliche Werkzeugaufspannplatte (3), die gegen die feste Werkzeugaufspannplatte in Richtung einer Spritzachse mit Hilfe eines Linearantriebes (5), der in der Endplatte und der beweglichen Werkzeugaufspannplatte gelagert ist, längsverschiebbar ist, die feste und die bewegliche Werkzeugaufspannplatte senkrecht zur Spritzachse ausgerichtete Aufspannflächen (2.1, 3.1) zur Aufnahme der Formhälften eines Formwerkzeuges besitzen und die Schließ- und Aufreißkraft, die während des Einspritz- und Aufreißvorganges durch den Linearantrieb erzeugt wird, vom Maschinenrahmen aufgenommen wird, dadurch gekennzeichnet, daß die feste Werkzeugaufspannplatte (2) im zugehörigen Schenkel des Maschinenrahmens (1) in mindestens zwei horizontal verlaufenden Lagerachsen (9, 10) oberhalb und unterhalb der Spritzachse (7) befestigt ist und mit der unteren Lagerachse (10) über mindestens ein derart elastisch verformbares Element (13) verbunden ist, daß die durch die auftretende Schließkraft bzw. Zuhaltekraft erzeugte Aufweitung des c-förmigen Maschinenrahmens (1) durch eine definierte elastische Verformung des Elementes bzw. der Elemente (13) derart ausgeglichen wird, daß die Aufspannfläche (2.1) der Werkzeugaufspannplatte(2) in ihrer senkrechten Lage verbleibt.

3. Holmlose Formschließeinrichtung für Spritzgießmaschinen bestehend aus einem c-förmigen Maschinenrahmen (1), an dessen einem Schenkel eine feste Werkzeugaufspannplatte (2) und an dessen anderem Schenkel eine Endplatte (4) angeordnet sind, dazwischen auf Führungen eine bewegliche Werkzeugaufspannplatte (3), die gegen die feste Werkzeugaufspannplatte in Richtung einer Spritzachse mit Hilfe eines Linearantriebes (5), der in der Endplatte und der beweglichen Werkzeugaufspannplatte gelagert ist, längsverschiebbar ist, die feste und die bewegliche Werkzeugaufspannplatte senkrecht zur Spritzachse ausgerichtete Aufspannflächen zur Aufnahme der Formhälften eines Formwerkzeuges besitzen und die Schließ- und Aufreißkraft, die während des Einspritz- und Aufreißvorganges durch den Linearantrieb erzeugt wird, vom Maschinenrahmen aufgenommen wird, dadurch gekennzeichnet, daß die Endplatte (4) im zugehörigen Schenkel des Maschinenrahmens (1) in mindestens zwei horizontal verlaufenden Lagerachsen (11, 12) oberhalb und unterhalb der Spritzachse (7) befestigt ist und mit der unteren Lagerachse (12) über mindestens ein derart elastisch verformbares Element (13) verbunden ist, daß die durch die auftretende Schließkraft bzw. Zuhaltekraft erzeugte Aufweitung des c-förmigen Maschinenrahmens (1) durch eine definierte elastische Verformung des Elementes bzw. der Elemente (13) derart ausgeglichen wird, daß die Aufspannfläche (3.1) der beweglichen Werkzeugaufspannplatte (3) und/oder die Endplatte (4) in ihrer senkrechten Lage verbleibt.

4. Holmlose Formschließeinrichtung nach Anspruch 1, dadurch gekennzeichnet, daß die oberhalb der Spritzachse (7) angeordneten Lagerachsen (9, 11) vorzugsweise auf einer oberen horizontalen Ebene (EHO) und die unterhalb der Spritzachse (7) angeordneten Lagerachsen (10, 12) vorzugsweise auf einer unteren horizontalen Ebene (EHU) liegen, wobei die oberen Lagerachsen (9, 11) und die unteren Lagerachsen (10, 12) unterschiedliche Abstände zur Aufspannfläche (2.1, 3.1) der Werkzeugaufspannplatten (2,3) besitzen.

5. Holmlose Formschließeinrichtung nach Anspruch 2, dadurch gekennzeichnet, daß der Linearantrieb (5) durch ein Gelenk (4.4) direkt oder über die Endplatte (4) einachsig im Maschinenrahmen (1) aufgenommen wird und die bewegliche Werkzeugaufspannplatte (3) mit dem Linearantrieb (5) durch ein Gelenk (5.1), das vorzugsweise als Kugelgelenk ausgebildet ist, miteinander verbunden sind.

6. Holmlose Formschließeinrichtung nach Anspruch 3, dadurch gekennzeichnet, daß die feste Werkzeugaufspannplatte (2) durch ein Gelenk (2.6) einachsig im Maschinenrahmen (1) gelagert ist und die bewegliche Werkzeugaufspannplatte (3) mit dem Linearantrieb (5) über ein Gelenk (5.1), das vorzugsweise als Kugelgelenk ausgebildet ist, miteinander verbunden sind.

7. Holmlose Formschließeinrichtung nach einem der Ansprüche 1 bis 6, dadurch gekennzeichnet, daß unterhalb und zwischen der Endplatte (4) und der festen Werkzeugaufspannplatte (2) beidseitig am Maschinenrahmen (1) Führungsschienen (6) angeordnet sind, die an ihren Enden über Gelenke (6.1) drehbeweglich mit dem Maschinenrahmen (1) verbunden sind.

8. Holmlose Formschließeinrichtung nach einem der Ansprüche 1 bis 7, dadurch gekennzeichnet, daß die bewegliche Werkzeugaufspannplatte (3) auf den Führungsschienen (6) längsverfahrbar geführt und abgestützt ist.

9. Holmlose Formschließeinrichtung nach einem der Ansprüche 1 bis 8, dadurch gekennzeichnet, daß die elastisch verformbaren Elemente aus paarweise angeordneten Druckstäben (13) bestehen, die an ihrem einen Ende mit der Endplatte (4) bzw. der festen Werkzeugaufspannplatte (2) lösbar verbunden sind und am jeweils anderen Ende mit den unterhalb der Spritzachse (7) angeordneten Lagerachsen (10, 12) im Maschinenrahmen (1) in Verbindung stehen.

10. Holmlose Formschließeinrichtung nach einem der Ansprüche 1 bis 8, dadurch gekennzeichnet, daß die elastisch verformbaren Elemente aus Stützarmen (2.3) und (4.2) bestehen, die fester Bestandteil der Endplatte (4) und/oder der festen Werkzeugaufspannplatte (2) sind und im mittleren Bereich durch Ausnehmungen oder Ausfräsungen (2.31, 4.21) im Querschnitt vermindert sind.

11. Holmlose Formschließeinrichtung nach einem der Ansprüche 1 bis 10, dadurch gekennzeichnet, daß jeweils zwei Führungsschienen (6) an ihren Enden in Gelenken (6.1) beidseitig von jeder Seitenwand (1.1) des Maschinenrabmens (1) auf einem Bolzen (1.5) gelagert sind und der Bolzen (1.5) seinerseits in Lagerbuchsen (1.4), die in den Seitenwänden (1.1) des Maschinenrahmens (1) angeordnet sind, aufgenommen wird.

12. Holmlose Formschließeinrichtung nach einem der Ansprüche 1 bis 11, dadurch gekennzeichnet, daß an der Unterseite der beweglichen Werkzeugaufspannplatte (3) jeweils in vertikalen Lagerachsen (3.2) und horizontalen Lagerachsen (3.3) Rollen (3.21) und Rollen (3.31) so gelagert sind, daß sie auf den Führungsschienen (6) abrollbar sind.

13. Holmlose Formschließeinrichtung nach einem der Ansprüche 1 bis 11, dadurch gekennzeichnet, daß an der Unterseite der beweglichen Werkzeugaufspannplatte (3) jeweils seitlich Nuten (3.4), die mit Gleitmaterial (3.41) ausgekleidet sind, so angeordnet sind, daß sie die Führungsschienen (6) umschließen.

14. Holmlose Formschließeinrichtung nach einer der Ansprüche 1 bis 12, dadurch gekennzeichnet, daß die Rollen (3.31), die an der beweglichen Werkzeugaufspannplatte (3) angeordnet sind die Führungsschienen (6) in Querrichtung umgreifen und in Längsrichtung darauf abrollbar sind.

15. Holmlose Formschließeinrichtung nach einem der Ansprüche 3 bis 14, dadurch gekennzeichnet, daß die Führungsschienen (6), vorzugsweise an den Innenseiten vom Maschinenrahmen (1) an ihrem einen Ende lösbar mit der festen Werkzeugaufspannplatte (2) und am anderen Ende über ein Gelenk (6.1) mit dem Maschinenrahmen (1) verbunden sind.

## Claims

1. Spar-less mould-closing apparatus for injection moulding machines, consisting of a c-shaped machine frame (1) on one limb of which a fixed tool-clamping plate (2), and on the other limb an end plate (4) are disposed, and between them on guides, a movable tool-clamping plate (3) which is longitudinally displaceable towards the fixed tool-clamping plate in the direction of one axis of injection with the aid of a linear drive (5) which is mounted in the end plate and the movable tool-clamping plate, the fixed and movable tool-clamping plates possess clamping faces (2.1, 3.1), which are oriented perpendicularly to the axis of injection, for receiving the mould halves of a moulding tool, and the closing and tearing-open forces which are generated by the linear drive during the injecting and tearing-open operations are absorbed by the machine frame, characterised in that the fixed tool-clamping plate (2) and the end plate (4) in the pertinent limbs of the machine frame (1) are, in each case, fastened in at least two horizontally extending bearing spindles (9, 10, 11, 12) above and below the axis (7) of injection, the end plate (4) and the fixed tool-clamping plate (2) being connected to the lower bearing spindles (10, 12) in such a way, via at least one elastically deformable element (13) in each case, that the expansion of the c-shaped machine frame (1) generated by the closing force or locking force which occurs is partially absorbed by a defined elastic deformation of the elements (13), so that the clamping faces (2.1, 3.1) of the tool-clamping plates (2, 3) remain devoid of angular deflection in their perpendicular location.

2. Spar-less mould-closing apparatus for injection moulding machines consisting of a c-shaped machine frame (1) on one limb of which a fixed tool-clamping plate (2), and on the other limb an end plate (4) are disposed, and between them on guides, a movable tool-clamping plate (3) which is longitudinally displaceable towards the fixed tool-clamping plate in the direction of one axis of injection with the aid of a linear drive (5) which is mounted in the end plate and the movable tool-clamping plate, the fixed and movable tool-clamping plates possess clamping faces (2.1, 3.1), which are oriented perpendicularly to the axis of injection, for receiving the mould halves of a moulding tool, and the closing and tearing-open forces which are generated by the linear drive during the injecting and tearing-open operations are absorbed by the machine frame, characterised in that the fixed tool-clamping plate (2) in the pertinent limb of the machine frame (1) is fastened in at least two horizontally extending bearing spindles (9, 10) above and below the axis (7) of injection and is connected to the lower bearing spindle (10) via at least one element (13) which is elastically deformable in such a way that the expansion of the c-shaped machine frame (1) generated by the closing force or locking force which occurs is compensated for by a defined elastic deformation of the element or elements (13) in such a way that the clamping face (2.1) of the tool-clamping plate (2) remains in its perpendicular location.

3. Spar-less mould-closing apparatus for injection moulding machines consisting of a c-shaped machine frame (1) on one limb of which a fixed tool-clamping plate (2), and on the other limb an end plate (4) are disposed, and between them on guides, a movable tool-clamping plate (3) which is longitudinally displaceable towards the fixed tool-clamping plate in the direction of one axis of injection with the aid of a linear drive (5) which is mounted in the end plate and the movable tool-clamping plate, the fixed and movable tool-clamping plates possess clamping faces, which are oriented perpendicularly to the axis of injection, for receiving the mould halves of a moulding tool, and the closing and tearing-open forces which are generated by the linear drive during the injecting and tearing-open operations are absorbed by the machine frame, characterised in that the end plate (4) in the pertinent limb of the machine frame (1) is fastened in at least two horizontally extending bearing spindles (11, 12) above and below the axis (7) of injection and is connected to the lower bearing spindle (12) via at least one element (13) which is elastically deformable in such a way that the expansion of the c-shaped machine frame (1) generated by the closing force or locking force which occurs is compensated for by a defined elastic deformation of the element or elements (13) in such a way that the clamping face (3.1) of the movable tool-clamping plate (3) and/or the end plate (4) remain(s) in its/their perpendicular location.

4. Spar-less mould-closing apparatus according to claim 1, characterised in that the bearing spindles (9, 11) disposed above the axis (7) of injection preferably lie in an upper horizontal plane (EHO) and the bearing spindles (10, 12) disposed below the axis (7) of injection preferably lie in a lower horizontal plane (EHU), the upper bearing spindles (9, 11) and the lower bearing spindles (10, 12) being at different distances from the clamping face (2.1, 3.1) of the tool-clamping plates (2, 3).

5. Spar-less mould-closing apparatus according to claim 2, characterised in that the linear drive (5) is received by a joint (4.4), either directly or via the end plate (4), uniaxially in the machine frame (1), and the movable tool-clamping plate (3) with the linear drive (5) are connected to one another by a joint (5.1) which is preferably constructed as a ball joint.

6. Spar-less mould-closing apparatus according to claim 3, characterised in that the fixed tool-clamping plate (2) is uniaxially mounted in the machine frame (1) by means of a joint (2.6), and the movable tool-clamping plate (3) with the linear drive (5) are connected to one another via a joint (5.1) which is preferably constructed as a ball joint.

7. Spar-less mould-closing apparatus according to one of claims 1 to 6, characterised in that there are disposed on the machine frame (1) on both sides, below and between the end plate (4) and the fixed tool-clamping plate (2), guide rails (6) which, at their ends, are connected in a rotationally movable manner to the machine frame (1) via joints (6.1).

8. Spar-less mould-closing apparatus according to one of claims 1 to 7, characterised in that the movable tool-clamping plate (3) is guided and supported on the guide rails (6) so as to be capable of longitudinal travel.

9. Spar-less mould-closing apparatus according to one of claims 1 to 8, characterised in that the elastically deformable elements consist of compression bars (13) which are disposed in pairs and are detachably connected, at one of their ends, to the end plate (4) and fixed tool-clamping plate (2) respectively, and are in communication, at the other end in each case, with the bearing spindles (10, 12) in the machine frame (1) which are disposed below the axis (7) of injection.

10. Spar-less mould-closing apparatus according to one of claims 1 to 8, characterised in that the elastically deformable elements consist of supporting arms (2.3) and (4.2) which are a fixed component of the end plate (4) and/or of the fixed tool-clamping plate (2) and are reduced in cross-section in the central region by means of clearances or recesses (2.31, 4.21).

11. Spar-less mould-closing apparatus according to one of claims 1 to 10, characterised in that two guide rails (6), in each case, are mounted, at their ends, in joints (6.1) on either side of each side wall (1.1) of the machine frame (1) on a bolt (1.5), and the bolt (1.5) is, for its part, received in bearing bushes (1.4) which are disposed in the side walls (1.1) of the machine frame (1).

12. Spar-less mould-closing apparatus according to one of claims 1 to 11, characterised in that rollers (3.21) and rollers (3.31) are mounted on the underside of the movable tool-clamping plate (3) in vertical bearing spindles (3.2) and horizontal bearing spindles (3.3) respectively, in such a way that they can be rolled along on the guide rails (6).

13. Spar-less mould-closing apparatus according to one of claims 1 to 11, characterised in that grooves (3.4), which are lined with sliding material (3.41), are disposed laterally in each case on the underside of the movable tool-clamping plate (3) in such a way that they enclose the guide rails (6).

14. Spar-less mould-closing apparatus according to one of claims 1 to 12, characterised in that the rollers (3.31) which are disposed on the movable tool-clamping plate (3) engage around the guide rails (6) in the transverse direction and can be rolled along thereon in the longitudinal direction.

15. Spar-less mould-closing apparatus according to one of claims 3 to 14, characterised in that the guide rails (6) are connected, preferably on the inner sides of the machine frame (1), detachably to the fixed tool-clamping plate (2) at one of their ends, and to the machine frame (1) via a joint (6.1) at the other end.

## Revendications

1. Dispositif sans longeron, pour fermer le moule d'une machine de coulée par injection, dans lequel :
• le dispositif est composé d'un bâti (1) de machine en forme de (C) dont une aile porte une plaque fixe (2) de serrage d'outil tandis que l'autre aile porte une plaque d'extrémité (4),
• entre les plaques (2) et (4) peut se déplacer longitudinalement sur des guides une plaque mobile (3) de serrage d'outil, vers la plaque fixe de serrage selon la direction d'un axe d'injection, avec l'aide d'un entraînement linéaire (5) logé dans la plaque d'extrémité et dans la plaque mobile,
• la plaque fixe et la plaque mobile de serrage de l'outil possèdent des portées de serrage (2.1, 3.1) dirigées perpendiculairement à l'axe d'injection et servant à recevoir les moitiés d'un outil de moulage,
• la force de fermeture et la force de séparation exercées pendant l'injection et la séparation par l'entraînement linéaire, sont supportées par le bâti de la machine ,
• ce dispositif étant caractérisé en ce que
• la plaque fixe de serrage (2) et la plaque d'extrémité (4) sont fixées chacune dans l'aile correspondante du bâti de machine (1) sur au moins deux axes horizontaux de palier (9, 10, 11, 12) situés au-dessus et au-dessous de l'axe d'injection (7),
• les plaques (2) et (4) sont reliées aux axes inférieurs de palier (10, 12), chacune par au moins un élément (13) à déformation élastique, de manière que l'élargissement du bâti de machine (1) en forme de (C) que produit la force de fermeture ou de maintien est absorbé en partie par une déformation élastique définie des éléments (13) faisant que les portées de serrage (2.1, 3.1) des plaques (2, 3) conservent leurs positions verticales sans écart angulaire.

2. Dispositif sans longeron, pour fermer le moule d'une machine de coulée par injection, dans lequel :
• le dispositif est composé d'un bâti (1) de machine en forme de (C) dont une aile porte une plaque fixe (2) de serrage d'outil tandis que l'autre aile porte une plaque d'extrémité (4),
• entre les plaques (2) et (4) peut se déplacer longitudinalement sur des guides une plaque mobile (3) de serrage d'outil, vers la plaque fixe de serrage selon la direction d'un axe d'injection, avec l'aide d'un entraînement linéaire (5) logé dans la plaque d'extrémité et dans la plaque mobile,
• la plaque fixe et la plaque mobile de serrage de l'outil possèdent des portées de serrage (2.1, 3.1) perpendiculaires à l'axe d'injection et servant à recevoir les moitiés d'un outil de moulage,
• la force de fermeture et la force de séparation exercées pendant l'injection et la séparation par l'entraînement linéaire, sont supportées par le bâti de la machine,
• ce dispositif étant caractérisé en ce que
• la plaque fixe de serrage d'outil (2), dans la branche correspondante du bâti de machine (1) est fixée sur au moins deux barres horizontales de palier (9, 10) situées au-dessus et au-dessous de l'axe d'injection (7) en étant reliée à l'axe inférieur de palier (10) par au moins un élément (13) capable de se déformer élastiquement de manière que l'élargissement du bâti de machine (1) produit par la force de fermeture ou de maintien, est compensé par une déformation élastique définie de l'élément ou des éléments (13) faisant que la portée de serrage (2.1) de la plaque de serrage (2) conserve sa position verticale.

3. Dispositif sans longeron, pour fermer le moule d'une machine de coulée par injection, dans lequel :
• le dispositif est composé d'un bâti (1) de machine en forme de (C) dont une aile porte une plaque fixe (2) de serrage d'outil tandis que l'autre aile porte une plaque d'extrémité (4),
• entre les plaques (2) et (4) peut se déplacer longitudinalement sur des guides une plaque mobile (3) de serrage d'outil, vers la plaque fixe de serrage selon la direction d'un axe d'injection, avec l'aide d'un entraînement linéaire (5) logé dans la plaque d'extrémité et dans la plaque mobile,
• la plaque fixe et la plaque mobile de serrage de l'outil possèdent des portées de serrage (2.1, 3.1) perpendiculaires à l'axe d'injection et servant à recevoir les moitiés d'un outil de moulage,
• la force de fermeture et la force de séparation exercées pendant l'injection et la séparation par l'entraînement linéaire, sont supportées par le bâti de la machine,
• ce dispositif étant caractérisé en ce que
• la plaque d'extrémité (4), dans la branche correspondante du bâti de machine (1), est fixée sur au moins deux barres horizontales de palier (11, 12) situées au-dessus et au-dessous de l'axe d'injection (7), en étant reliée à l'axe inférieur de palier (12) par au moins un élément (13) capable de se déformer élastiquement de manière que l'élargissement du bâti de machine (1) produit par la force de fermeture ou de maintien est compensé par une déformation élastique définie de l'élément ou des éléments (13), faisant que la portée de serrage (3.1) de la plaque de serrage (3) mobile et/ou de la plaque d'extrémité (4) conserve sa position verticale.

4. Dispositif sans longeron, de fermeture de moule selon la revendication 1,
caractérisé en ce que
les axes de palier (9, 11) situés au-dessus de l'axe d'injection (7) se trouvent de préférence dans un plan horizontal supérieur EHO tandis que les axes de palier (10, 12) situés au-dessous de l'axe d'injection (7) sont de préférence dans un plan horizontal inférieur EHU, les axes supérieurs (9, 11) et les axes inférieurs (10, 12) étant à des distances différentes des portées respectives (2.1, 3.1) des plaques de serrage (2, 3).

5. Dispositif sans longeron, de fermeture du moule selon la revendication 2,
caractérisé en ce que
l'entraînement linéaire (5) est monté sur un axe dans le bâti de machine (1) directement par une articulation (4.4) ou par l'intermédiaire de la plaque d'extrémité (4), et la plaque mobile de serrage (3) est reliée à l'entraînement linéaire (5) par une articulation (5.1), de préférence sphérique.

6. Dispositif sans longeron, de fermeture de moule selon la revendication 3,
caractérisé en ce que
la plaque fixe de serrage d'outil (2) est montée sur un axe, par une articulation (2, 6), dans le bâti de machine (1) tandis que la plaque mobile de serrage d'outil (3) est reliée à l'entraînement linéaire (5) par une articulation (5.1) de préférence sphérique.

7. Dispositif sans longeron, pour fermeture de moule, selon une des revendications 1 à 6,
caractérisé en ce qu'
en dessous et entre la plaque d'extrémité (4) et la plaque fixe de serrage d'outil (2), des deux côtés du bâti de machine se trouvent deux rails de guidage (6) qui à leurs extrémités sont reliés au bâti de machine (1) par des articulations (6.1) de rotation

8. Dispositif sans longeron, pour fermeture de moule selon une des revendications 1 à 7,
caractérisé en ce que
la plaque mobile de serrage d'outil (3) s'appuie et peut se déplacer longitudinalement sur les rails de guidage (6).

9. Dispositif sans longeron, de fermeture de moule selon une des revendications 1 à 8,
caractérisé en ce que
les éléments déformables élastiquement sont constitués de barres de pression disposées par paires, reliées de manière amovible à une de leurs extrémités, à la plaque d'extrémité (4) ou à la plaque fixe de serrage (2), tandis qu'à leurs autres extrémités, elles sont reliées aux axes de palier (10, 12) montés dans le bâti de machine (1) en dessous de l'axe d'injection.

10. Dispositif sans longeron, de fermeture de moule selon une des revendications 1 à 8,
caractérisé en ce que
les éléments déformables élastiquement sont constitués par des bras de soutien (2, 3) et (4,2) qui sont des composants fixes de la plaque d'extrémité (4) et/ou de la plaque fixe (2) de serrage de l'outil et ont chacun leur section diminuée, en partie centrale par un évidement ou un fraisage (2,31, 4,21).

11. Dispositif sans longeron, de fermeture de moule selon une des revendications 1 à 10,
caractérisé en ce que
deux rails de guidage (6) portent à chacune de leurs extrémités, des articulations (6.1) montées des deux côtés de chaque paroi latérale (1.1) du bâti de machine (1), sur un pivot (1.5) qui est lui-même logé dans des douilles de palier (1.4) disposées dans les parois latérales (1.1) du bâti (1).

12. Dispositif sans longeron, de fermeture de moule selon une des revendications 1 à 11,
caractérisé en ce que
le long du côté inférieur de la plaque mobile (3) de serrage de l'outil, des galets (3.21) et (3.31) sont montés respectivement sur des axes verticaux (3.2) et horizontaux (3.3) de manière à pouvoir rouler sur les rails de guidage (6).

13. Dispositif sans longeron, de fermeture de moule selon une des revendications 1 à 11,
caractérisé en ce que
le long du côté inférieur de la plaque mobile (3) de serrage de l'outil, se trouvent de chaque côté des rainures (3.4) recouvertes d'un matériau favorisant le glissement (3.41) et entourant les rails de guidage (6).

14. Dispositif sans longeron, de fermeture de moule selon une des revendications 1 à 12,
caractérisé en ce que
les galets (3.31) montés sur la plaque mobile (3) de serrage de l'outil sont en prise en direction transversale sur les rails de guidage (6) et peuvent rouler dessus en direction longitudinale.

15. Dispositif sans longeron, de fermeture de moule selon une des revendications 3 à 14,
caractérisé en ce que
les rails de guidage (6), de préférence le long des faces internes du bâti de machine (1) sont reliés à une de leurs extrémités, de manière amovible à la plaque fixe (2) de serrage de l'outil et, à l'autre extrémité, par une articulation (6.1) au bâti de machine (1).
